(19) Europäisches Patentamt
European Patent Office
Office européen des brevets

(11) Publication number: 0 067 002 B1

(12) # EUROPEAN PATENT SPECIFICATION

(45) Date of publication of patent specification: 25.03.87

(51) Int. Cl.⁴: C 07 F 5/02, C 10 M 107/52

(21) Application number: 82302649.7

(22) Date of filing: 24.05.82

(54) **Novel boron-containing compositions useful as lubricant additives.**

(30) Priority: 26.05.81 US 267239
11.02.82 US 347762

(43) Date of publication of application:
15.12.82 Bulletin 82/50

(45) Publication of the grant of the patent:
25.03.87 Bulletin 87/13

(84) Designated Contracting States:
BE DE FR GB IT NL SE

(56) References cited:
DE-A-2 503 735
FR-A-1 439 517
US-A-2 989 467

DERWENT JAPANESE PATENTS REPORT, vol. 4, no. 14, 1965, patent 7068/65, "Polyetherpolyol"

"TENSIDE-TEXTILHILFSMITTEL-WASCHROHSTOFFE", K. LINDNER, Wissenschaftliche Verlagsges., Stuttgart, FRG, 1964, 2th Ed., pp. 835-836

(73) Proprietor: The Lubrizol Corporation
29400 Lakeland Boulevard
Wickliffe, Ohio 44092 (US)

(72) Inventor: Davis, Kirk Emerson c/o The Lubrizol Corporation
Patent Department 29400 Lakeland Boulevard
Wickliffe Ohio 44092 (US)

(74) Representative: Thomas, Roger Tamlyn et al
D. Young & Co. 10 Staple Inn
London WC1V 7RD (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 067 002 B1

Courier Press, Leamington Spa, England.

**Description**

This invention concerns a method for preparing boron-containing compositions (reaction products) which can be used as additives for lubricants.

German OLS 25 03 735 describes a process for the oxalkylation of orthoboric acid in which alkylene oxides containing from 1 to 8 carbon atoms are reacted with orthoboric acid in a molar ratio of 5:1 to 1:1 in the presence of aprotic organic solvents at a temperature of from 100 to 160°C or in the presence of catalytic mixtures of bases or Lewis acids at a temperature of from 70 to 120°C in a closed system under a pressure of 4 to 9 bar. It is indicated in this specification that the products can be used as mineral oil additives, hydraulic fluid additives and biocides.

Derwent Japanese Patents Report 4-(14), 1965 No. 7068/65 describes the reaction of an optionally substituted alkylene oxide (ethylene oxide, propylene oxide, 1,2-butylene oxide, styrene oxide and epichlorohydrin are mentioned) with boron oxide at a temperature between room temperature and 150°C to form high molecular weight boric acid ester intermediates. The intermediates are hydrolysed to give polyether polyols which may be used for preparing polyurethane rubber.

The invention provides a method for preparing an oil-soluble boron-containing composition which comprises reacting, at a temperature from 80°C to 250°C.,

(A) at least one of boric acid and boron trioxide with

(B) at least one epoxide having the formula

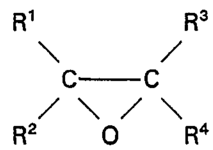

(I)

Wherein each of $R^1$, $R^2$, $R^3$ and $R^4$ is hydrogen or an aliphatic radical or any two thereof together form a cyclic radical, said epoxide containing at least 8 carbon atoms; said reagent A being blended with a heel of previously obtained oil-soluble boron-containing composition prepared by reacting reagents A and B.

The increasing sophistication of internal combustion engines necessitates the development of new types of lubricants for use in them. The new engines in many instances operate under far more severe conditions than was formerly the case, and the lubricants must be tailored so as to permit them to be used over prolonged periods of time under those severe conditions.

As an example of the diverse types of requirements for lubricants, consideration should be given to diesel engines in heavy machinery. The lubricant performance requirements in such engines are much different from those in gasoline engines for automobiles. Nevertheless, it is frequently advantageous to formulate a single multi-purpose lubricant for use in both types of engines.

The severity of the conditions in diesel heavy machinery engines requires the presence in the lubricant of relatively high levels of ashless dispersants and/or ash-producing detergents. For example, many such lubricants contain basic alkaline earth metal phenates in amounts of 2.5% by weight or higher, and/or free hydroxy group-containing alkenylsuccinic acid ester dispersants in amounts of 1.5% or higher. The use of such lubricants in ordinary gasoline engines frequently causes a high degree of wear on engine parts. Conventional anti-wear agents such as zinc dialkylphosphorodithioates are, in many instances, not entirely effective in eliminating this problem.

Ways were therefore sought of providing anti-wear additives effective in lubricants used under a wide variety of operating conditions.

Preferred features of the invention will now be described in more detail.

As will be apparent, the boron-containing compositions prepared by the method of the invention involves the reaction of two materials. Reagent A may be boron trioxide or any of the various forms of boric acid, including metaboric acid ($HBO_2$), orthoboric acid ($H_3BO_3$) and tetraboric acid ($H_2B_4O_7$). Boric acid, and especially orthoboric acid is preferred.

Reagent B is at least one epoxide having the above formula and containing at least 8 carbon atoms. In the formula, each of the R values is most often hydrogen or an aliphatic radical with at least one being an aliphatic radical containing at least 6 carbon atoms. The term "aliphatic radical" includes aliphatic hydrocarbon radicals (e.g., hexyl, heptyl, octyl, decyl, dodecyl, tetradecyl, stearyl, hexenyl, oleyl), preferably free from acetylenic unsaturation; substituted aliphatic hydrocarbon radicals including substituents such as hydroxy, nitro, carbalkoxy, alkoxy and alkylthio (especially those containing a lower alkyl radical; i.e., one containing 7 carbon atoms or less); and hetero atom-containing radicals in which the hetero atoms may be, for example, oxygen, nitrogen or sulfur. The aliphatic radicals are preferably alkyl radicals and more preferably those containing from 10 to 20 carbon atoms. It is within the scope of the invention to use commercial mixtures of epoxides; for example, commercial mixtures of $C_{14-16}$ or $C_{14-18}$ epoxides, wherein $R^1$ is a mixture of alkyl radicals having two carbon atoms less than the epoxide. Most desirably, $R^1$ is a straight-chain alkyl radical and especially the tetradecyl radical.

Also within the scope of the invention is the use of epoxides in which any two of the R radicals form a

cyclic radical, which may be alicyclic or heterocyclic. Examples are n-butylcyclopentene oxide, n-hexylcyclohexene oxide, methylenecyclooctene oxide and 2-methylene-3-n-hexyltetrahydrofuran oxide.

The boron-containing compositions may be prepared by blending the two reagents and heating them at a temperature from 80° to 250°C., preferably from 100° to 200°C., for a period of time sufficient for reaction to take place. If desired, the reaction may be effected in the presence of a substantially inert, normally liquid organic diluent such as toluene, xylene, chlorobenzene, or dimethylformamide, but the use of such diluents is usually unnecessary. During the reaction, water is frequently evolved and may be removed by distillation.

In the method according to the invention for preparing the boron-containing compositions reagent A is initially blended with a "heel" of product, which has been found to minimise foaming and exothermic reactions which generate more heat than is desirable. As indicated above a "heel" of product is a previously obtained oil-soluble boron-containing composition prepared by reacting reactants A and B. The blend is conveniently heated to the desired reaction temperature, typically between 150° and 200°C., and reagent B is added gradually as water of reaction is removed.

The molar ratio of reagent A to reagent B is generally between 1:0.25 and 1:4. Ratios between 1:1 and 1:3 are preferred, with 1:2 being an especially preferred ratio.

It is frequently advantageous to employ a catalytic amount of an alkaline reagent to facilitate the reaction. Suitable alkaline reagents include inorganic bases and basic salts such as sodium hydroxide, potassium hydroxide and sodium carbonate; metal alkoxides such as sodium methoxide, potassium t-butoxide and calcium ethoxide; heterocyclic amines such as piperidine, morpholine and pyridine; and aliphatic amines such as n-butylamine, di-n-hexylamine and tri-n-butylamine. The preferred alkaline reagents are the aliphatic and heterocyclic amines and especially tertiary amines. In the method of the invention involving the use of the "heel", the alkaline reagent is typically added to the blend of the "heel" with reagent A.

The molecular structures of the compositions prepared by the method of this invention are not known with certainty. During their preparation water is evolved in near-stochiometric amounts for conversion of boric acid to boron trioxide when reagent A is boric acid, and gel permeation chromatography of the composition prepared from boric acid and a $C_{16}$ α-olefin oxide mixture in a 1:2 molar ratio indicates the presence in substantial amounts of three constituents having approximate molecular weights of 400, 600 and 1200. From these facts, it appears that the composition comprises principally borated condensation products of polymers of the epoxide with a minor proportion of compounds of one or both of the formulas

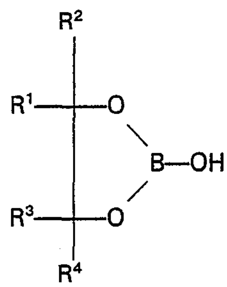 and 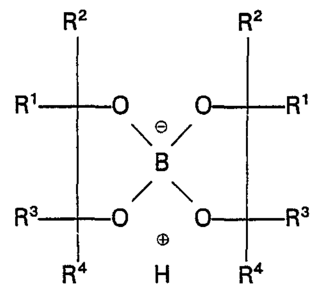

wherein $R^1$, $R^2$, $R^3$ and $R^4$ are as previously defined.

The method of preparation of the compositions of this invention is illustrated by the following Examples 8 and 9. All parts and percentages are by weight.

Example 1

A mixture of 1500 parts (6.25 moles) of 1-hexadecene oxide and 1 part of tri-n-butylamine is heated to 100—110°C under nitrogen, with stirring. Boric acid, 193 parts (3.13) moles) is added incrementally over 15 minutes. When boric acid addition is complete, the reaction mixture is heated to 185°C as water is removed by distillation. When water evolution ceases, the mixture is filtered while hot and the filtrate is allowed to cool to a waxy solid melting at 60—65°C. This solid is the desired product; it contains 2.7% boron.

Example 2

Following substantially the procedure of Example 1, 794 parts (3.31 moles) of the epoxide of Example 1 is reacted with 102.6 parts (1.65 moles) of boric acid in the absence of catalysts. The product contains 2.0% boron.

Example 3

Following substantially the procedure of Example 2, 2000 parts (8.3 moles) of 1-hexadecene oxide is reacted with 344 parts (5.6 moles) of boric acid. The product is a waxy solid containing 2.37% boron.

Example 4

A mixture of 1416 parts (6 moles) of a commercial mixture of $C_{14-16}$ α-olefin oxides, 124 parts (2 moles)

of boric acid, 1 part of tri-n-butylamine and 250 parts of xylene is heated under reflux for about 8 hours as water is removed by distillation. After water removal is complete, the xylene is removed by vacuum stripping and the residue is filtered. The product, a light yellow liquid, contains 1.52% boron.

Example 5

Boric acid, 81 parts (1.5 moles), is added over two hours at 90—120°C., to the α-olefin oxide mixture of Example 4. Tri-n-butylamine, 0.15 part, is added at 100°C and the mixture is heated at 130—160°C with stirring for 4 hours. It is then filtered, using a filter aid material. The filtrate, a viscous orange liquid, is the product; it contains 3.61% boron.

Example 6

Boron trioxide, 35 parts (0.5 mole), is added over 2 hours, at 100—130°C., to 118 parts (0.5 mole) of the α-olefin oxide mixture of Example 4. The mixture is then heated to 150°C and 0.2 part of tri-n-butylamine is added. An additional 118 parts of the epoxide mixture is added and heating is continued for 2 hours. The product is then filtered, using a filter aid material; the filtrate, a viscous orange liquid, is the product. It contains 3.02% boron.

Example 7

A mixture of 572 parts (2 moles) of 1-octene oxide, 62 parts (1 mole) of boric acid and 100 parts of toluene is heated under reflux for 18 hours as water is removed by distillation. The mixture is then vacuum stripped and the residue is filtered, using a filter aid material. The filtrate, an amber liquid, is the desired product; it contains 2.22% boron.

Example 8

A blend of 193 parts (3.13 moles) of boric acid, 1 part of tri-n-butylamine and a "heel" comprising 402 parts of the product of a previous reaction is heated to 188°C, with stirring, as volatiles are removed by distillation. After 8-1/2 hours, 1500 parts (6.25 moles) of 1-hexadecene oxide is added over 5-1/2 hours at 186—195°C, with stirring. Heating and stirring are continued for two hours as volatiles are removed. The material is then vacuum stripped and filtered at 93—99°C. The filtrate is the desired product; it contains 2.12% boron.

Example 9

A blend of 775 parts (12.5 moles) of boric acid and 944 parts of a "heel" is heated to 185°C under nitrogen, as volatiles are removed by distillation. 1-Hexadecene oxide, 3000 parts (12.5 moles), is added incrementally over 2-1/2 hours at 180—185°C. Heating is continued until removal of volatiles is complete. The residue is then vacuum stripped and filtered. The filtrate is the desired product; it contains 3.9% boron.

As previously indicated, the boron-containing compositions are useful as additives for lubricants. They are particularly effective in reducing wear which may result from the use in heavy-duty or multi-purpose lubricants of high levels of ashless or ash-producing dispersants and detergents. They are also effective as friction modifiers and rust inhibitors.

The boron-containing compositions can be employed in a variety of lubricants based on diverse oils of lubricating viscosity, including natural and synthetic lubricating oils and mixtures thereof. These lubricants include crankcase lubricating oils for spark-ignited and compression-ignited internal combustion engines, including automobile and truck engines, two-cycle engines, aviation piston engines, or marine and railroad diesel engines. They can also be used in gas engines, stationary power engines or turbines. Automatic transmission fluids, transaxle lubricants, gear lubricants, metal-working lubricants, hydraulic fluids and other lubricating oil and grease compositions may also benefit from the incorporation therein of the boron-containing compositions.

Natural oils include liquid petroleum oils and solvent-treated or acid-treated mineral lubricating oils of the paraffinic, naphthenic and mixed paraffinic-naphthenic types. Oils of lubricating viscosity derived from coal or shale are also useful base oils. Synthetic lubricating oils include hydrocarbon oils and halo-substituted hydrocarbon oils such as polymerized and interpolymerized olefins [e.g., polybutylenes, polypropylenes, propylene-isobutylene copolymers, chlorinated polybutylenes, poly(1-hexenes), poly(1-octenes), poly(1-decenes), etc. and mixtures thereof]; alkylbenzenes [e.g., dodecylbenzenes, tetradecylbenzenes, dinonylbenzenes, di(2-ethylhexyl)benzenes]; polyphenyls (e.g., biphenyls, terphenyls, alkylated polyphenyls, or alkylated diphenyl ethers and alkylated diphenyl sulfides and the derivatives, analogs and homologs thereof.

Alkylene oxide polymers and interpolymers and derivatives thereof where the terminal hydroxyl groups have been modified by esterification or etherification, constitute another class of known synthetic lubricating oils. These are exemplified by the oils prepared through polymerization of ethylene oxide or propylene oxide, the alkyl and aryl ethers of these polyoxyalkylene polymers (e.g., methyl-polyisopropylene glycol ether having an average molecular weight of 1000, diphenyl ether of polyethylene glycol having a molecular weight of 500—1000, diethyl ether of polypropylene glycol having a molecular weight of 1000—1500), or mono- and polycarboxylic esters thereof, for example, the acetic acid esters, mixed $C_3$—$C_8$ fatty acid esters, or the $C_{13}$ Oxo acid diester of tetraethylene glycol.

Another suitable class of synthetic lubricating oils comprises the esters of dicarboxylic acids (e.g., phthalic acid, succinic acid, alkyl succinic acids and alkenyl succinic acids, maleic acid, azelaic acid, suberic acid, sebacic acid, fumaric acid, adipic acid, linoleic acid dimer, malonic acid, alkyl malonic acids, alkenyl malonic acids) with a variety of alcohols (e.g., butyl alcohol, hexyl alcohol, dodecyl alcohol, 2-ethylhexyl alcohol, ethylene glycol, diethylene glycol monoether, propylene glycol). Specific examples of these esters include dibutyl adipate, di(2-ethylhexyl) sebacate, di-n-hexyl fumarate, dioctyl sebacate, diisooctyl azelate, diisodecyl azelate, dioctyl phthalate, didecyl phthalate, dieicosyl sebacate, the 2-ethylhexyl diester of linoleic acid dimer, or the complex ester formed by reacting one mole of sebacic acid with two moles of tetraethylene glycol and two moles of 2-ethylhexanoic acid.

Esters useful as synthetic oils also include those made from $C_5$ to $C_{12}$ monocarboxylic acids and polyols and polyol ethers such as neopentyl glycol, trimethylolpropane, pentaerythritol, dipentaerythritol, tripentaerythritol.

Silicon-based oils such as the polyalkyl-, polyaryl-, polalkoxy-, or polyaryloxy-siloxane oils and silicate oils comprise another useful class of synthetic lubricants [e.g., tetraethyl silicate, tetraisopropyl silicate, tetra-(2-ethylhexyl) silicate, tetra-(4-methyl-2-ethylhexyl) silicate, tetra-(p-tert-butylphenyl) silicate, hexa-(4-methyl-2-pentoxy)-disiloxane, poly(methyl)-siloxanes, poly(methylphenyl)siloxanes]. Other synthetic lubricating oils include liquid esters of phosphorus-containing acids (e.g., tricresyl phosphate, trioctyl phosphate, diethyl ester of decylphosphonic acid), polymeric tetrahydrofurans and the like.

Unrefined, refined and rerefined oils (and mixtures thereof) of the type disclosed hereinabove can be used in the lubricant compositions of the present invention. Unrefined oils are those obtained directly from a natural or synthetic source without further purification treatment. For example, a shale oil obtained directly from retorting operations, a petroleum oil obtained directly from distillation or ester oil obtained directly from an esterification process and used without further treatment would be an unrefined oil. Refined oils are similar to the unrefined oils except they have been further treated in one or more purification steps to improve one or more properties. Many such purification techniques are known to those of skill in the art such as solvent extraction, acid or base extraction, filtration, percolation, etc. Rerefined oils are obtained by processes similar to those used to obtain refined oils applied to refined oils which have been already used in service. Such rerefined oils are also known as reclaimed or reprocessed oils and often are additionally processed by techniques directed to removal of spent additives and oil breakdown products.

Generally, lubricants incorporating a composition prepared by the method of the present invention contain an amount of the boron-containing composition sufficient to provide it with anti-wear, friction modifying and/or rust inhibiting properties. Normally this amount will be about 0.01 to about 10%, preferably 0.1 to 5%, of the total weight of the lubricant.

Other additives may also be used in combination with the boron-containing compositions. Such additives include, for example, detergents and dispersants of the ash-producing or ashless type, corrosion- and oxidation-inhibiting agents, pour point depressing agents, extreme pressure agents, color stabilizers and anti-foam agents.

The ash-producing detergents are exemplified by oil-soluble neutral and basic salts of alkali or alkaline earth metals with sulfonic acids, carboxylic acids, or organic phosphorus acids characterized by at least one direct carbon-to-phosphorus linkage such as those prepared by the treatment of an olefin polymer (e.g., polyisobutene having a molecular weight of 1000) with a phosphorizing agent such as phosphorus trichloride, phosphorus heptasulfide, phosphorus pentasulfide, phosphorus trichloride and sulfur, white phosphorus and a sulfur halide, or phosphorothioic chloride. The most commonly used salts of such acids are those of sodium, potassium lithium, calcium, magnesium, strontium and barium.

The term "basic salt" is used to designate metal salts wherein the metal is present in stoichiometrically larger amounts than the organic acid radical. The commonly employed methods for preparing the basic salts involve heating a mineral oil solution of an acid with a stoichiometric excess of a metal neutralizing agent such as the metal oxide, hydroxide, carbonate, bicarbonate, or sulfide at a temperature above 50°C and filtering the resulting mass. The use of a "promoter" in the neutralization step to aid the incorporation of a large excess of metal likewise is known. Examples of compounds useful as the promoter include phenolic substances such as phenol, naphthol, alkylphenol, thiophenol, sulfurized alkylphenol, and condensation products of formaldehyde with a phenolic substance; alcohols such as methanol, 2-propanol, octyl alcohol, cellosolve, carbitol, ethylene glycol, stearyl alcohol, and cyclohexyl alcohol; and amines such as aniline, phenylenediamine, phenothiazine, phenyl-β-naphthylamine, and dodecylamine. A particularly effective method for preparing the basic salts comprises mixing an acid with an excess of a basic alkaline earth metal neutralizing agent and at least one alcohol promoter, and carbonating the mixture at an elevated temperature such as 60—200°C.

Ashless detergents and dispersants are so called despite the fact that, depending on its constitution, the dispersant may upon combustion yield a non-volatile material such as boric oxide or phosphorus pentoxide; however, it does not ordinarily contain metal and therefore does not yield a metal-containing ash on combustion. Many types are known in the art, and any of them are suitable for use in the lubricants of this invention. The following are illustrative:

(1) Reaction products of carboxylic acids (or derivatives thereof) containing at least about 34 and preferably at least about 54 carbon atoms with nitrogen-containing compounds such as amine, organic

hydroxy compounds such as phenols and alcohols, and/or basic inorganic materials. Examples of these "carboxylic dispersants" are described in British Patent 1,306,529 and in many U.S. Patents including the following:

| | | |
|---|---|---|
| 3,163,603 | 3,351,552 | 3,541,012 |
| 3,184,474 | 3,381,022 | 3,542,678 |
| 3,215,707 | 3,399,141 | 3,542,680 |
| 3,219,666 | 3,415,750 | 3,567,637 |
| 3,271,310 | 3,433,744 | 3,574,101 |
| 3,272,746 | 3,444,170 | 3,576,743 |
| 3,281,357 | 3,448,048 | 3,630,904 |
| 3,306,908 | 3,448,049 | 3,632,510 |
| 3,311,558 | 3,451,933 | 3,632,511 |
| 3,316,177 | 3,454,607 | 3,697,428 |
| 3,340,281 | 3,467,668 | 3,725,441 |
| 3,341,542 | 3,501,405 | 4,234,435 |
| 3,346,493 | 3,522,179 | Re 26,433 |

(2) Reaction products of relatively high molecular weight aliphatic or alicyclic halides with amines, preferably polyalkylene polyamines. These may be characterized as "amine dispersants" and examples thereof are described for example, in the following U.S. Patents:

| | |
|---|---|
| 3,275,554 | 3,454,555 |
| 3,438,757 | 3,565,804 |

(3) Reaction products of alkyl phenols in which the alkyl group contains at least about 30 carbon atoms with aldehydes (especially formaldehyde) and amines (especially polyalkylene polyamines), which may be characterized as "Mannich dispersants". The materials described in the following U.S. Patents are illustrative:

| | | |
|---|---|---|
| 2,459,112 | 3,442,808 | 3,591,598 |
| 2,962,442 | 3,448,047 | 3,600,372 |
| 2,984,550 | 3,454,497 | 3,634,515 |
| 3,036,003 | 3,459,661 | 3,649,229 |
| 3,166,516 | 3,461,172 | 3,697,574 |
| 3,236,770 | 3,493,520 | 3,725,277 |
| 3,355,270 | 3,539,633 | 3,725,480 |
| 3,368,972 | 3,558,743 | 3,726,882 |
| 3,413,347 | 3,586,629 | 3,980,569 |

(4) Products obtained by post-treating the carboxylic amine or Mannich dispersants with such reagents as urea, thiourea, carbon disulfide, aldehydes, ketones, carboxylic acids, hydrocarbon-substituted succinic anhydrides, nitriles, epoxides, boron compounds, or phosphorus compounds. Exemplary materials of this kind are described in the following U.S. Patents:

| | | | |
|---|---|---|---|
| 3,036,003 | 3,282,955 | 3,493,520 | 3,639,242 |
| 3,087,936 | 3,312,619 | 3,502,677 | 3,649,229 |
| 3,200,107 | 3,366,569 | 3,513,093 | 3,649,659 |
| 3,216,936 | 3,367,943 | 3,533,945 | 3,658,836 |
| 3,254,025 | 3,373,111 | 3,539,633 | 3,697,574 |
| 3,256,185 | 3,403,102 | 3,573,010 | 3,702,757 |
| 3,278,550 | 3,442,808 | 3,579,450 | 3,703,536 |
| 3,280,234 | 3,455,831 | 3,591,598 | 3,704,308 |
| 3,281,428 | 3,455,832 | 3,600,372 | 3,708,522 |

(5) Interpolymers of oil-solubilizing monomers such as decyl methacrylate, vinyl decyl ether and high molecular weight olefins with monomers containing polar substituents, e.g., aminoalkyl acrylates or acrylamides and poly-(oxyethylene)-substituted acrylates. These may be characterized as "polymeric dispersants" and examples thereof are disclosed in the following U.S. Patents:

| | |
|---|---|
| 3,329,658 | 3,666,730 |
| 3,449,250 | 3,687,849 |
| 3,519,565 | 3,702,300 |

Particularly preferred lubricants are those containing the boron-containing composition in

combination with at least one of (A) basic alkaline earth metal phenate or salicylate detergents in the amount of at least 2.5% by weight and (B) free hydroxy group-containing alkenylsuccinic acid ester dispersants in the amount of at least 1.5% by weight. When used in such lubricants, the boron-containing compositions cause a significant decrease in engine wear.

Extreme pressure agents and corrosion- and oxidation-inhibiting agents are exemplified by chlorinated aliphatic hydrocarbons such as chlorinated wax; organic sulfides and polysulfides such as benzyl disulfide, bis(chlorobenzyl)disulfide, dibutyl tetrasulfide, sulfurized methyl ester of oleic acid, sulfurized alkylphenol, sulfurized dipentene, and sulfurized terpene; phosphosulfurized hydrocarbons such as the reaction product of a phosphorus sulfide with terpentine or methyl oleate; phosphorus esters including principally dihydrocarbon and trihydrocarbon phosphites such as dibutyl phosphite, diheptyl phosphite, dicyclohexyl phosphite, pentylphenyl phosphite, dipentylphenyl phosphite, tridecyl phosphite, distearyl phosphite, dimethyl naphthyl phosphite, oleyl 4-pentylphenyl phosphite, polypropylene (molecular weight 500)-substituted phenyl phosphite, diisobutyl-substituted phenyl phosphite; metal thiocarbamates, such as zinc dioctyldithiocarbamate, and barium heptylphenyl dithiocarbamate; Group II metal phosphorodithioates such as zinc dicyclohexylphosphorodithioate, zinc dioctylphosphorodithioate, barium di(heptylphenyl)phosphorodithioate, cadmium dinonylphosphorodithioate, and the zinc salt of a phosphorodithioic acid produced by the reaction of phosphorus pentasulfide with an equimolar mixture of isopropyl alcohol and n-hexyl alcohol.

The boron-containing compositions can be added directly to the lubricant. Preferably, however, they are diluted with a substantially inert, normally liquid organic diluent such as mineral oil, naphtha, benzene, toluene or xylene, to form an additive concentrate. These concentrates usually contain from about 5% to about 25% by weight of the boron-containing composition and may contain, in addition, one or more other additives known in the art or described hereinabove.

Illustrative lubricating compositions are listed in the following table. All amounts except those for mineral oil are exclusive of mineral oil and other diluents.

| Ingredient | Lubricant (Parts by weight) A | B |
|---|---|---|
| Mineral oil | 87.94 | 14.70 |
| Poly-α-olefin-polyol carboxylate synthetic lubricant | — | 74.97 |
| Product of Example 1 | — | 1.00 |
| Product of Example 8 | 1.00 | — |
| Reaction product of polybutenyl succinic anhydride with ethylene polyamine and pentaerythritol | 1.62 | 2.20 |
| Polybutenyl succinic anhydride-ethylene polyamine reaction product | 1.80 | 1.71 |
| Basic magnesium polybutenyl-salicylate | — | 3.73 |
| Basic calcium tetrapropenyl-phenate | 2.56 | — |
| Basic calcium salt of sulfurized tetrapropenylphenol | 1.49 | — |
| Basic calcium petroleum sulfonate | 2.40 | — |
| Ethylene-propylene-diene terpolymer | — | 0.11 |
| Vinyl acetate-vinyl ether-dialkyl fumarate terpolymer | — | 0.20 |
| Zinc dialkylphosphorodithioate | 1.19 | 1.38 |
| Silicone anti-foam agent | 0.011 | 0.011 |
| Total basic alkaline earth metal phenate detergent | 4.05 | — |
| Total hydroxy group-containing alkenyl-succinic acid ester dispersant | 1.62 | 2.20 |

**Claims**

1. A method for preparing an oil-soluble boron-containing composition which comprises reacting, at a temperature from 80° to 250°C.

(A) at least one of boric acid or boron trioxide with

(B) at least one epoxide having the formula

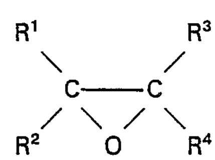

wherein each of $R^1$, $R^2$, $R^3$ and $R^4$ is hydrogen or an aliphatic radical, or any two thereof together form a cyclic radical, said epoxide containing at least 8 carbon atoms; said reagent A being blended with a heel of a previously obtained oil-soluble boron-containing composition prepared by reacting reagents A and B.

2. A method according to Claim 1, wherein the molar ratio of reagents A and B being reacted is between 1:0.25 and 1:4.

3. A method according to either of Claims 1 and 2 wherein each of $R^1$, $R^2$, $R^3$ and $R^4$ is hydrogen or an aliphatic radical, at least one thereof being an aliphatic radical containing at least 6 carbon atoms.

4. A method according to Claim 3 wherein $R^1$ is an alkyl radical containing from 10 to 20 carbon atoms and $R^2$, $R^3$ and $R^4$ are each hydrogen.

5. A method according to any one of the preceding claims wherein $R^1$ is a straight-chain radical.

6. A method according to Claim 5 wherein $R^1$ is the tetradecyl radical.

7. A method according to any one of the preceding claims wherein reagent A is orthoboric acid.

8. A method according to any one of the preceding claims wherein reagent B is added gradually to the blend of reagent A and the heel.

9. A method according to any one of the preceding claims wherein the blend of reagent A and the heel is heated to remove any volatiles present prior to the addition of reagent B.

10. A method according to any one of the preceding claims wherein the blend of reagent A and the heel also contains a catalytic amount of an alkaline reagent.

11. A method according to Claim 10 wherein the alkaline reagent is an aliphatic amine.

12. A method according to Claim 11 wherein the alkaline reagent is a tertiary amine.

13. A method according to Claim 12 wherein the tertiary amine is tri-n-butylamine.

14. A method according to any one of Claims 1—9 wherein the reaction is effected in the presence of a catalytic amount of an alkaline reagent.

15. A method according to Claim 14 wherein the alkaline reagent is an aliphatic amine.

16. A method according to Claim 15 wherein the amine is a tertiary amine.

17. A method according to Claim 16 wherein the amine is tri-n-butylamine.

**Patentansprüche**

1. Verfahren zur Herstellung einer öllöslichen borhaltigen Zusammensetzung durch Umsetzung bei einer Temperatur von 80 bis 250°C von

(A) mindestens einer der Verbindung Borsäure oder Bortrioxid mit
(B) mindestens einem Epoxid der Formel

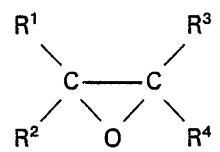

in der die Reste $R^1$, $R^2$, $R^3$ und $R^4$ jeweils Wasserstoffatome oder einen aliphatischen Rest bedeuten oder irgendwelche zwei davon zusammen einen cyclischen Rest darstellen, wobei das Epoxid mindestens 8 Kohlenstoffatome aufweist und wobei der Reaktionsteilnehmer A mit einem Rest einer früher erhaltenen, durch Umsetzung der Reaktionsteilnehmer A und B hergestellten öllöslichen borhaltigen Zusammensetzung vermischt ist.

2. Verfahren nach Anspruch 1, wobei das Molverhältnis der zur Umsetzung gelangenden Reaktionsteilnehmer A und B zwischen 1:0,25 und 1:4 liegt.

3. Verfahren nach den Ansprüchen 1 und 2, wobei die Reste $R^1$, $R^2$, $R^3$ und $R^4$ jeweils ein Wasserstoffatom oder einen aliphatischen Rest bedeuten, wobei mindestens einer davon einen aliphatischen Rest mit mindestens 6 Kohlenstoffatomen darstellt.

4. Verfahren nach Anspruch 3, wobei $R^1$ einen Alkylrest mit 10 bis 20 Kohlenstoffatomen darstellt und $R^2$ und $R^3$ und $R^4$ jeweils Wasserstoffatome bedeuten.

5. Verfahren nach einem der vorangehenden Ansprüche, wobei $R^1$ einen geradkettigen Rest bedeutet.

6. Verfahren nach Anspruch 5, wobei $R^1$ den Tetradecylrest darstellt.

7. Verfahren nach einem der vorangehenden Ansprüche, wobei der Umsetzungsteilnehmer A Orthoborsäure ist.

8. Verfahren nach einem der vorangehenden Ansprüche, wobei der Umsetzungsteilnehmer B nach und nach zu dem Gemisch aus dem Reaktionsteilnehmer A und dem Rest der früheren Umsetzung gegeben wird.

9. Verfahren nach einem der vorangehenden Ansprüche, wobei das Gemisch aus dem Reaktionsteilnehmer A und dem Rest der früheren Umsetzung vor der Zugabe des Reaktionsteilnehmers B zur Entfernung aller anwesenden flüchtigen Bestandteil erhitzt wird.

10. Verfahren nach einem der vorangehenden Ansprüche, wobei das Gemisch aus dem Reaktionsteilnehmer A und dem Rest der früheren Umsetzung auch eine katalytische Menge eines alkalischen Reagenz enthält.

11. Verfahren nach Anspruch 10, wobei das alkalische Reagenz ein aliphatisches Amin ist.

12. Verfahren nach Anspruch 11, wobei das alkalische Reagenz ein tertiäres Amin ist.

13. Verfahren nach Anspruch 12, wobei das tertiäre Amin Tri-n-butylamin ist.

14. Verfahren nach einem der Ansprüche 1 bis 9, wobei die Umsetzung in Gegenwart einer katalytischen Menge eines alkalischen Reagenz durchgeführt wird.

15. Verfahren nach Anspruch 14, wobei das alkalische Reagenz ein aliphatisches Amin ist.

16. Verfahren nach Anspruch 15, wobei das Amin ein tertiäres Amin ist.

17. Verfahren nach Anspruch 16, wobei das Amin Tri-n-butylamin ist.

**Revendications**

1. Procédé de préparation d'une composition contenant du bore oléosoluble qui comprend la réaction, à une température de 80° à 250°C,

(A) de l'un au moins parmi l'acide borique et le trioxyde de bore avec

(B) au moins un époxyde de formule

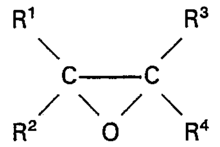

(I)

dans laquelle chaque $R^1$, $R^2$, $R^3$ et $R^4$ est un hydrogène ou un radical aliphatique, ou deux quelconque d'entre eux forment un radical cyclique, ledit époxyde contenant un moins 8 atomes de carbone; ledit réactif A étant mélangé avec un résidu d'une composition contenant du bore oléosoluble obtenue précédemment, préparée en faisant réagir les réactifs A et B.

2. Procédé selon la revendication 1, dans lequel le rapport molaire des réactifs A et B qui réagissent est compris entre 1:0,25 et 1:4.

3. Procédé selon l'une quelconque des revendications 1 et 2, dans lequel chacun de $R^1$, $R^2$, $R^3$ et $R^4$ est un hydrogène ou un radical aliphatique, l'un au moins étant un radical aliphatique contenant au moins 6 atomes de carbone.

4. Procédé selon la revendication 3, dans lequel $R^1$ est un radical alkyle contenant de 10 à 20 atomes de carbone et $R^2$, $R^3$ et $R^4$ sont chacun un hydrogène.

5. Procédé selon l'une quelconque des revendications précédentes, dans lequel $R^1$ est un radical à chaîne droite.

6. Procédé selon la revendication 5, dans lequel $R^1$ est le radical tétradécyle.

7. Procédé selon l'une quelconque des revendications précédentes, dans lequel le réactif A est l'acide orthoborique.

8. Procédé selon l'une quelconque des revendications précédentes, dans lequel le réactif B est ajouté progressivement au mélange du réactif A et du résidu.

9. Procédé selon l'une quelconque des revendications précédentes, dans lequel le mélange du réactif A et du résidu est chauffé pour éliminer toute matière volatile présente avant l'addition du réactif B.

10. Procédé selon l'une quelconque des revendications précédentes, dans lequel le mélange du réactif A et du résidu contient aussi une quantité catalytique d'un réactif alcalin.

11. Procédé selon la revendication 10, dans lequel le réactif alcalin est une amine aliphatique.

12. Procédé selon la revendication 11, dans lequel le réactif alcalin est une amine tertiaire.

13. Procédé selon la revendication 12, dans lequel l'amine tertiaire est la tri-n-butylamine.

14. Procédé selon l'une quelconque des revendications 1 à 9, dans lequel la réaction est effectuée en présence d'une quantité catalytique d'une réactif alcalin.

15. Procédé selon la revendication 14, dans lequel le réactif alcalin est une amine aliphatique.

16. Procédé selon la revendication 15, dans lequel l'amine est une amine tertiaire.

17. Procédé selon la revendication 16, dans lequel l'amine est la tri-n-butylamine.